Europäisches Patentamt

European Patent Office

Office européen des brevets

(11) Veröffentlichungsnummer: **0 382 010**

**A1**

(12) **EUROPÄISCHE PATENTANMELDUNG**

(21) Anmeldenummer: **90101471.2**

(22) Anmeldetag: **25.01.90**

(51) Int. Cl.5: **C12G 3/02, C12G 3/08, A23L 2/34**

(30) Priorität: **10.02.89 CH 488/89**

(43) Veröffentlichungstag der Anmeldung:
    **16.08.90 Patentblatt 90/33**

(84) Benannte Vertragsstaaten:
    **AT BE CH DE DK ES FR GB GR IT LI LU NL SE**

(71) Anmelder: **Kühne, Anton, Dr.**
    **Geeringstrasse 58**
    **CH-8049 Zürich(CH)**

    Anmelder: **Laforce, Roger, Dr.**
    **Feldstrasse 39**

    **CH-8180 Bülach(CH)**

(72) Erfinder: **Kühne, Anton, Dr.**
    **Geeringstrasse 58**
    **CH-8049 Zürich(CH)**
    Erfinder: **Laforce, Roger, Dr.**
    **Feldstrasse 39**
    **CH-8180 Bülach(CH)**

(74) Vertreter: **EGLI-EUROPEAN PATENT ATTORNEYS**
    **Horneggstrasse 4**
    **CH-8008 Zürich(CH)**

(54) **Verfahren zur Verminderung des Kaloriengehalts in einem Getränk durch mikrobiologischen Abbau von Zuckern sowie Verwendungen des Produkts und des Mikroorganismus.**

(57) Aus dem Saft werden zumindest diejenigen Mikroorganismen entfernt, die eine Gärung oder Fermentierung hervorrufen könnten. Dem Saft werden dann für die Züchtung von Mikroorganismen geeignete Nährsalze und gegebenenfalls Wasser beigegeben. Die Mischung wird in einen Reaktor eingegeben. Ein Inokulum eines nichtfermentierenden Mikroorganismus, der keinen Alkohol bilden kann und lebensmitteltechnisch unbedenklich ist, wird beigegeben. Die Biomasse wird während einer vorbestimmten Zeitdauer unter geeigneten Bedingungen gehalten, um den Mikroorganismus vermehren zu lassen. Danach wird den Inhalt des Reaktors unterhalb Raumtemperatur abgekühlt und die Biomasse abschieden, um eine klare zellfreie Flüssigkeit zu gewinnen, die als konsumbereites Getränk oder für die weitere Verarbeitung zum Getränk bereitgestellt wird.

Als Mikroorganismus kann man eine rein aerob wachsende Hefe verwenden, vorzugsweise Trichosporon brassicae.

Der Abbau des Zuckers kann erfolgen, bis keine Glucose mehr vorhanden ist, oder bis auch ein gewisser Abbau der Fructose erfolgt, oder nur bis der Gehalt an Glucose nach deren Gärung den gewünschten Alkoholgehalt ergibt. Somit kann man alkoholfreie Getränke gegebenenfalls für Diabetiker oder auch alkoholarme mostartige Getränke herstellen.

## Verfahren zur Verminderung des Kaloriengehalts in einem Getränk auf Basis von Frucht- und/oder Gemüsesaft durch mikrobiologischen Abbau von Zuckern, sowie Verwendungen des Produkts und des Mikroorganismus

Die Erfindung betrifft ein Verfahren zur Verminderung des Kaloriengehalts in einem Getränk auf Basis von Frucht-und/oder Gemüsesaft durch mikrobiologischen Abbau von Zuckern in dem zu behandelnden Saft, sowie Verwendungen des Produkts aus dem Verfahren und des Mikroorganismus.

Es war bisher nicht möglich, Kohlehydrate wie Glucose und Fructose in verschiedenen Frucht- und Gemüsesäften wie Traubensaft, Apfelsaft, Birnensaft, Möhrensaft oder Citrussäften selektiv zu entfernen, ohne die geschmackichen und geruchlichen Eigenschaften wesentlich zu beeinträchtigen.

Allgemein enthalten Fruchtsäfte etwa 10 bis 100 g/l Glucose und Fructose, je nach Fruchtsorte und deren Herkunft. Das Verhältnis Glucose:Fructose beträgt bei Traubensaft etwa 1:1, bei Apfelsaft etwa 1:4. Bei den bisher angewendeten Verfahren zur Verminderung des Kaloriengehalts in solchen Fruchtsäften werden die Kohlenhydrate nicht selektiv entzogen, d.h. es wird nicht Glucose entzogen und Fructose belassen. Beispielsweise ist aus CH-632137 bekannt, den in einem Fruchtsaft enthaltenen Zucker durch die Einwirkung von Mikroorganismen oder Enzymen abzubauen. Es entstehen dabei Alkohol und/oder andere Nebenprodukte wie Milchsäure, die durch chemische und/oder physikalische Behandlung entfernt werden müssen. Wenn der Abbau des Zuckers über Alkohol erfolgte, verbleiben aber organoleptische Eigenschaften, die denjenigen des Weins ähnlich und dem Fruchtsaft fremd sind. Wenn der Abbau des Zuckers über Nebenprodukte wie Milchsäure erfolgte, verbleiben andere organoleptische Eigenschaften, die denjenigen des natürlichen Fruchtsafts noch weiter entfernt sind.

Fruchtsäfte mit Fructose aber ohne Glucose, die zum Konsum durch Diabetiker empfohlen werden könnten, sind nach diesen bekannten Verfahren nicht herstellbar; beim Stand der Technik weisen Fruchtsäfte, die zum Konsum durch Diabetiker empfohlen werden könnten, keinen natürlich süssen Geschmack auf, sie müssen mit künstlichen Süssstoffen versetzt werden.

Ausserdem besteht in der Getränkeindustrie ein Bedarf für vergorene Getränke mit reduzierten Alkoholgehalt. Unterbricht man die Garung, so ist das resultierende Getränk wegen der verbleibenden Kohlenhydrate süss. So ist z.B. aus EP-0223705 bekannt, den Traubensaft erst einer Gärung mit einem Mikroorganismus wie Gluconobacter oxydans zu unterziehen, um einen Teil der Glucose in Gluconsäure umzuwandeln, bis deren Gehalt 5-15 g/l erreicht, danach den Gluconobacter oxydans zu entfernen und das resultierende Zwischenprodukt auf herkömmliche Weise mit einer Bier- und Weinhefe wie Saccharomyces cerevisiae zu vergären. Man erhält damit ein Getränk mit 3-7 Vol.-% Alkohol, das aber immer noch 10-30 g/l Zucker enthält und daher sehr süss ist. Dieses Getränk ist zwar im Alkoholgehalt reduziert, seine organoleptischen Eigenschaften sind jedoch denjenigen des Weins nicht ähnlich.

Ein anderer Versuch, vergorene Getränke mit reduziertem Alkoholgehalt herzustellen, ist z.B. aus CH-602025 bekannt. Hier wird die Vergärung einer Würze, die als traditionelle Alkoholgärung keinen Sauerstoff benötigt, unter (allerdings nicht näher beschriebenen) aeroben Bedingungen durchgeführt. Die Gärung bleibt dabei eine gewöhnliche alkoholische Garung mit anschliessendem Abbau des Alkohols (vgl. dazu A.Fiechter, G.F.Fuhrmann und O.Käppeli in "Regulation of glucose metabolism in growing yeast cells", Advances in Microbiological Physiology, 1981, 22:123-183). Weil die Oxidation von Alkohol durch eine Bier- und Weinhefe wie Saccharomyces cerevisiae, Saccharomyces uvarum oder Saccharomyces carlsbergensis ein reiches Nährstoffangebot erfordert, müssen zur Erreichung dieses Abbaus des Alkohols sehr viele Zusätze beigemischt werden, dadurch werden aber die organoleptischen Eigenschaften stark verändert. Übrigens sind viele der nötigen Zusätze von der einschlägigen Gesetzgebung nicht erlaubt.

Zum besseren Verständnis der Erfindung ist eine kurze Klarstellung der hier gemeinten mikrobiologischen Vorgänge unerlässlich, dazu wird aus "Allgemeine Mikrobiologie" von H.G.Schlegel (Thieme, Stuttgart 1976, 230) zitiert: "Zu den Gärungen im strengen Sinne zählt man diejenigen Prozesse der Energiegewinnung, bei denen der abgespaltene Wasserstoff schliesslich auf organische H-Acceptoren übertragen wird. Sauerstoff ist an Gärungsprozessen nicht beteiligt. Gärungen sind zu unterscheiden von den Vorgängen der anaeroben Atmung, die sich auch unter Sauerstoffausschluss abspielen, bei denen der Wassertsoff aber über die Atmungskette beispielsweise auf Nitrat oder Sulfat als End-H-Acceptor übertragen wird. Schliesslich sind die Gärungen sensu stricto von den unvollständigen Oxidationen zu unterscheiden, die unkorrekt auch als aerobe Gärungen bezeichnet werden, weil sich in der Nährlösung ähnliche organische Verbindungen anhäufen wie bei den Gärungen."

Im allgemeinen erzeugt jeder Mikroorganismus, der in einem Medium wächst, ein charakteristisches Geschmacks- und Geruchsmuster. Die Herstellung alkoholischer Getränke erfolgt seit Jahrtausenden zumindest im europäischen und davon abgeleiteten Kulturraum mit einer Bier- und Weinhefe wie Saccharomyces cerevisiae, so dass sich die geschmacklichen und geruchlichen Ansprüche der Menschheit vorwiegend an diesen Mikroorganismus angepasst haben. Aus diesem Grunde sollten vergorene Getränke mit reduzierten Alkoholgehalt ein Geschmacks-und Geruchsmuster aufweisen, das demjenigen einer Bier- und Weinhefe wie Saccharomyces cerevisiae möglichst ähnlich ist, während normalerweise unvergorene Getränke wie Frucht- und Gemüsesäfte in ihren organoleptischen Eigenschaften möglichst unverändert bleiben sollten.

Aufgabe der Erfindung ist es, ein Verfahren anzugeben, mit welchem Getränke auf Basis von Frucht- und/oder Gemüsesaft mit vermindertem Kaloriengehalt, nämlich vergorene Getränke mit reduzierten Alkoholgehalt und/oder normalerweise unvergorene Getränke wie Frucht- und Gemüsesäfte mit reduziertem Zuckergehalt, durch mikrobiologischen Abbau von Zuckern herstellbar sind, ohne in ihren organoleptischen Eigenschaften von denjenigen der entsprechenden vergorenen oder unvergorenen Getränke auf nennenswerte Weise abzuweichen. Eine weitere Aufgabe der Erfindung ist es, für diese Zwecke verwendbare Mikroorganismen anzugeben.

Diese Aufgabe wird erfindungsgemäss gelöst mit dem in Anspruch 1 angegebenen Verfahren. Vorteilhafte Weiterbildungen des erfindungsgemässen Verfahrens ergeben sich aus den abhängigen Ansprüchen 2 und 3, eine erfindungsgemässe Verwendungen des Mikroorganismus ergibt sich aus Anspruch 4.

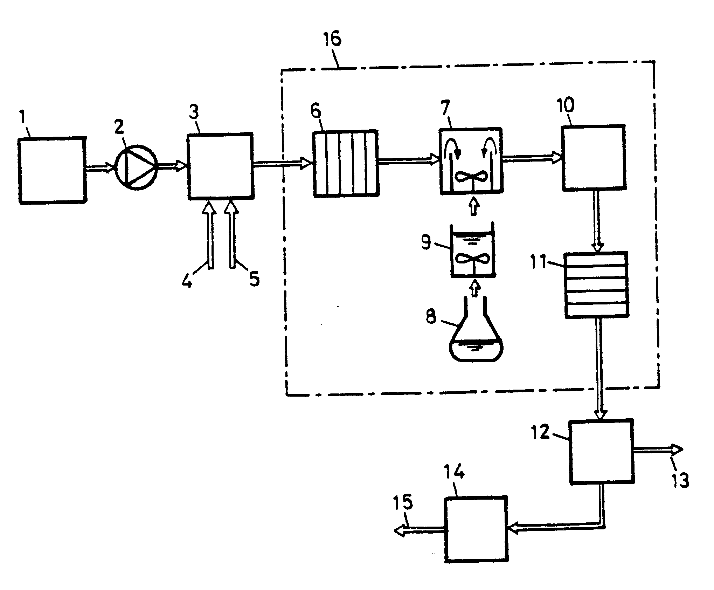

Nachstehend wird die Erfindung mit Bezugnahme auf die Zeichnung näher erläutert.

Die einzige Figur zeigt schematisch eine Anlage zur Durchführung des erfindungsgemässen Verfahrens.

Ein zu behandelnder Saft wie Traubensaft, Apfelsaft, Birnensaft, Möhrensaft oder Citrussäften wird in einem Behälter 1 bereitgestellt (das Verfahren ist aber auch auf auch ähnliche zuckerhaltige Lösungen anwendbar).

Durch Wirkung einer Pumpe 2 wird der Saft in einen Mischtank 3 gefördert, wo dem Saft über eine Zuleitung 4 bis zu 0,3 g/l Nährsalze und gegebenenfalls über eine Zuleitung 5 Wasser beigegeben werden. Die Nährsalze sind als sogenannte Hefenährsalze bekannt, es sind die gleichen, die in der Wein produktion erlaubt und eingesetzt werden. Das Wasser wird insbesondere dann benötigt, wenn der Saft im Behälter 1 als Konzentrat vorliegt, es wird dann auf den natürlichen Zuckergehalt

rückverdünnt.

Die im Mischtank 3 resultierende Mischung wird über ein Filter 6 geleitet, um daraus die Mikroorganismen zu entfernen, die eine Gärung oder Fermentierung hervorrufen könnten: diese Sterilfiltration erfolgt vorzugsweise mit einer Porengrösse von 0,1-1 μm. In einer Variante kann die Sterilfiltration durch eine Pasteurisierung und dementsprechend das Filter 6 durch eine Pasteurisierungsanlage ersetzt werden.

Es ist zu verstehen, dass die Beigabe von Nährsalzen und gegebenenfalls Wasser auch nach dem Entfernen der Mikroorganismen, die eine Gärung oder Fermentierung hervorrufen könnten, erfolgen kann.

Die sterilfiltrierte oder pasteurisierte Mischung wird einem Reaktor 7 zugeführt, der mit einem nichtfermentierenden Mikroorganismus (Hefe oder Pilz) angeimpft wird. Dieser Mikroorganismus ist ein solcher, der keinen Alkohol bilden kann, lebensmitteltechnisch unbedenklich ist und das Geschmacks- und Geruchsmuster des als Endprodukt gewonnenen Getränks nicht negativ beeinflusst. Der Reaktor 7 selbst ist vor dem Eingeben der Mischung und des Inokulums sterilisiert worden. Es ist vorteilhaft, den Mikroorganismus in einer Vorkultur 8 auf einer geeigneten Nährlösung zu züchten und in einem Verdünnungsreaktor 9 als Inokulum für den Reaktor 7 bereitzustellen. Das Volumen des Inokulums im Verdünnungsreaktor 9 kann beispielsweise 5-20 % des Volumens des Reaktors 7 betragen und die Vorkultur 8 ist zur Lieferung der entsprechenden Mengen zu dimensionieren. Die Vorkultur 8 kann man mit steriler zuckerhaltiger Lösung vorbereiten, die mit 0,3 g/l Hefenährsalzen supplementiert wird.

Es wird mit Nachdruck wiederholt, dass der Mikroorganis mus keinen Alkohol bilden kann, also nicht in die gleiche Kategorie fällt wie die Bier- und Weinhefen wie Saccharomyces cerevisiae, Saccharomyces uvarum oder Saccharomyces carlsbergensis. Der Mikroorganismus ist mit Vorteil die bekannte Hefe Trichosporon brassicae, die von einer Stammsammlung bezogen werden kann. Auch eine andere rein aerob wachsende Hefe wàre verwendbar. Für die Züchtung ist die Temperatur auf 5-40°C und vorzugsweise 20°C zu halten. Wird die Vorkultur 8 in Schüttelkolben hergestellt, so wird die Schüttelfrequenz so eingestellt, dass die Versorgung der Kultur mit Sauerstoff ausreichend ist. Nach Erreichen einer genügenden Zelldichte und vorzugsweise gerade bei vollständigem Verbrauch der Glucose in der Nährlösung der Vorkultur 8 wird diese zur Bereitstellung des Inokulums verdünnt.

Im Reaktor 7 wird dann die inokulierte Mischung unter zur Vermehrung der Biomasse geeigneten Bedingungen wie Rührung, Belüftung, gegebenenfalls Schaumabscheidung usw. auf einer vorbestimmten Temperatur während einer vorbestimmten Zeitdauer gehalten, letzteres je nach der Betriebsart des Reaktors entweder als Charge oder aufgrund der Verweilzeit beim Durchlauf. Dabei ist der Reaktor 7 mit Vorteil ein Bioreaktor, der eine gute Durchmischung gewährleistet, beispielsweise ein Schlaufenreaktor mit Leitzylinder und Schiffspropeller. Vorzugsweise ist der Partialdruck des Sauerstoffs in der Mischung (der $pO_2$-Wert) grösser als Null, damit das Wachstum der Biomasse nicht von der Sauerstoffkonzentration limitiert wird, im übrigen richten sich die optimalen Wachstumsparameter für die Biomasse (Rührung, Belüftung) nach dem verwendeten bzw. herrschenden $pO_2$-Wert. Um die Schaumbildung minimal zu halten, kann mit Oberflächenbelüftung und Überdruck beispielsweise zwischen 0,1 und 5 bar gearbeitet werden, oder es kann ein mechanisches Schaumabscheidersystem verwendet werden.

Die Dauer der Züchtung der Biomasse (die vorstehend erwähnte vorbestimmte Zeit) ist von der vorgesehenen Verwendung des Endprodukts abhängig. Für ein alkoholfreies kalorienarmes Getränk wird der Abbau des Zuckers so lange fortgesetzt, bis keine Glucose mehr vorhanden ist; je nach Bedarf wird anschliessend der Abbau der Fructose bis zum gewünschten Wert weitergeführt, beispielsweise um ein Getränk für Diabetiker herzustellen. Für ein alkoholarmes Getränk bestimmt die Menge des Restzuckers den Alkoholgehalt, somit wird der Abbau des Zuckers so lange fortgesetzt, bis der Gehalt an Glucose den gewünschten Wert erreicht, beispielsweise bis zu einer Konzentration von ca. 20 g/l zur Herstellung eines alkoholarmen Weines mit einem Alkoholgehalt von 3 Vol.-%.

Anschliessend wird der Inhalt des Reaktors 7 in einen gekühlten Auffangtank 10 übergeleitet, wo eine Abkühlung unterhalb Raumtemperatur, beispielsweise auf 5-10°C erfolgt. Der Auffangtank 10 selbst ist vor dem Eingeben des Inhalts des Reaktors 7 sterilisiert worden.

Danach wird die Biomasse in einem Abscheider 11 abgetrennt, wobei der Abscheider 11 ein Filter, eine Zentrifuge oder dergleichen sein kann. Die Biomasse wird eliminiert oder einer anderweitigen Verwertung bestimmt und geleitet. Die klare zellfreie Flüssigkeit (Filtrat, Überstand oder dergleichen) wird in einen gekühlten Produkttank 12 geleitet, wo sie für die vorgesehene Verwendung bereitsteht und bis zur Weiterverarbeitung beispielsweise auf 5-10°C gekühlt gelagert wird. Diese vorgesehene Verwendung ist in einer Alternative (a) eine direkte Verwendung als zuckerarme Lösung 13 für alkoholfreie Getränke, in einer anderen Alternative (b) eine Verwendung als Ausgangssubstanz für eine klassische Gärung mit Bier- und Weinhefe wie Saccharomyces cerevisiae oder Saccharomyces uvarum unter Beigabe der üblichen Zusatzstoffe in einer gesamthaft mit 14 symbolisierten Anlage, welche eine alkoholhaltige Lösung 15 für mostartige Getränke liefert.

Der mit Vorteil steril zu haltende bzw. zu sterilisierende Bereich ist mit dem Rahmen 16 angedeutet und umfasst mit Vorteil das Filter 6, den Reaktor 7, den Auffangtank 10 und den Abscheider 11, sowie die Vorkultur 8 und den Verdünnungsreaktor 9.

Mit dem beschriebenen, erfindungsgemässen Verfahren wird Glucose mit einer nicht fermentierender Hefe schneller abgebaut als Fructose. Bei vollständigem Abbau der Glucose liegt Fructose immer noch in Konzentrationen von 50-100 g/l im Saft vor. Diese Fructose kann aber nach Belieben weiter abgebaut werden. Der Zuckergehalt, bei dem der Abbau des Zuckers beendet wird, wird dabei so gewählt, dass ein resultierendes alkoholfreies Getränk nach wie vor angenehm süss bleibt, ein resultierendes alkoholarmes Getränk nach der klassischen Alkoholgärung eine Alkoholkonzentration von 1-3 Vol.-% aufweist. Somit können mit dem erfindungsgemässen Verfahren sowohl (a) natürlich schmeckende, im Zuckergehalt reduzierte, gegebenenfalls durch vollständigen Abbau der Glucose auch für Diabetiker zugängliche Frucht- und Gemüsesäfte gewonnen als auch (b) alkoholarme wein- bzw. mostähnliche Getränke mit einem einwandfreien, vom Wein bzw. Most nicht unterscheidbaren Geschmacks- und Geruchsmuster hergestellt werden. Ebenso ist, wenn erwünscht, eine nachgeschaltete klassische Milchsäuregärung möglich.

Die für das Verfahren notwendigen Zusätze sind von den meisten einschlägigen Gesetzen (Lebensmittelgesetzgebung) zugelassen.

Beim erfindungsgemässen Verfahren wird der Zucker ohne Gärung abgebaut, d.h. es wird kein Alkohol gebildet, der später abgebaut werden müsste: der Zucker wird im wesentlichen in Biomasse umgewandelt. Das System ist somit rein aerob, eben deswegen wird es mit Vorteil mit einem $pO_2$-Wert grösser als Null gefahren.

## Ansprüche

1. Verfahren zur Verminderung des Kaloriengehalts in einem Getränk auf Basis von Frucht- und/oder Gemüsesaft durch mikrobiologischen Abbau von Zuckern in dem zu behandelnden Saft, bei welchem man
- aus dem zu behandelnden Saft zumindest diejenigen Mikroorganismen entfernt oder abtötet, die eine Gärung oder Fermentierung hervorrufen könnten,
- dem von den Mikroorganismen befreiten Saft Nährsalze, die für die Züchtung von Mikroorganismen geeignet sind, und gegebenenfalls Wasser beigibt,

- die resultierende Mischung in einen Reaktor eingibt und darin der Mischung ein Inokulum eines nichtfermentierenden Mikroorganismus beigibt, der keinen Alkohol bilden kann und lebensmitteltechnisch unbedenklich ist,

- die Biomasse während einer vorbestimmten Zeitdauer unter geeigneten Bedingungen bezüglich Temperatur, Rührung, Belüftung, gegebenenfalls Schaumabscheidung hält, um den Mikroorganismus vermehren zu lassen, und

- danach die Biomasse abscheidet, um eine klare zellfreie Flüssigkeit zu gewinnen, die man als konsumbereites Getränk oder für die weitere Verarbeitung zum Getränk bereitstellt,

dadurch gekennzeichnet, dass man

- als Mikroorganismus die Hefe Trichosporon brassicae verwendet,

- im Reaktor eine Oberflächenbelüftung und einen Luft-Überdruck zwischen 0,1 und 5 bar erzeugt, und

- den Inhalt des Reaktors nach Vermehrung der Biomasse und vor deren Abscheidung in einen unterhalb Raumtemperatur gekühlten und vorher sterilisierten Auffangtank eingibt.

2. Verfahren nach Anspruch 1, dadurch gekennzeichnet, dass man den Mikroorganismus in einer Vorkultur auf einer geeigneten Nährlösung züchtet und in einem Verdünnungsreaktor als Inokulum für den Reaktor bereitstellt.

3. Verfahren nach Anspruch 1, dadurch gekennzeichnet, dass man zur Herstellung eines Getränks für Diabetiker die vorbestimmte Zeitdauer so wählt, dass der Abbau des Zuckers mindestens so lange erfolgt, bis keine Glucose mehr vorhanden ist und auch ein Abbau der Fructose bis zu einem gewünschten Wert erfolgt.

4. Verwendung einer rein aerob wachsenden Hefe zum mikrobiologischen Abbau von Zuckern in einem Frucht- und/oder Gemüsesaft zwecks Verminderung des Kaloriengehalts in dem Saft, dadurch gekennzeichnet, dass die Hefe Trichosporon brassicae ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | CH-A- 668 887 (SCHWEIZERISCHE EIDGENOSSENSCHAFT ETH, INSTITUT FÜR BIOTECHNOLOGIE) <br> * Das ganze Dokument * <br> --- | 1-4 | C 12 G 3/02 <br> C 12 G 3/08 <br> A 23 L 2/34 |
| X | FR-A-2 601 687 (UNIVERSITE DE DIJON) <br> * Seite 2, Zeilen 18-22; Seite 13, Zeile 10 - Seite 16, Zeile 28; Ansprüche 1,11-20 * <br> --- | 1,3,4 | |
| A,D | CH-A- 632 137 (WEM, WERBEAGENTUR MOOR) <br> * Zusammenfassung * <br> --- | 1,3,4 | |
| A,D | CH-A- 602 025 (Dr. ING. HANS MÜLLER) <br> * Das ganze Dokument * <br> --- | 1 | |
| A | EP-A-0 223 705 (PERNOD RICARD) <br> * Ansprüche 1-5 * <br> --- | 1 | |
| A | GB-A- 426 729 (M. WAHL) <br> * Ansprüche 1-3 * <br> ----- | 1 | RECHERCHIERTE SACHGEBIETE (Int. Cl.5) <br><br> C 12 G <br> A 23 L |

Der vorliegende Recherchenbericht wurde für alle Patentansprüche erstellt

| Recherchenort | Abschlußdatum der Recherche | Prüfer |
|---|---|---|
| DEN HAAG | 07-03-1990 | EPAILLARD P.J.H.M. |